Europäisches Patentamt

European Patent Office

Office européen des brevets

(11) Veröffentlichungsnummer: **0 438 675 B1**

## (12) EUROPÄISCHE PATENTSCHRIFT

(45) Veröffentlichungstag der Patentschrift: **15.06.94**

(51) Int. Cl.5: **G01B 9/02**

(21) Anmeldenummer: **90123268.6**

(22) Anmeldetag: **05.12.90**

(54) Interferometrischer Sensor zur Messung von Abstandsänderungen einer kleinen Fläche.

(30) Priorität: **23.12.89 DE 3942896**

(43) Veröffentlichungstag der Anmeldung:
**31.07.91 Patentblatt 91/31**

(45) Bekanntmachung des Hinweises auf die
Patenterteilung:
**15.06.94 Patentblatt 94/24**

(84) Benannte Vertragsstaaten:
**DE FR GB IT NL SE**

(56) Entgegenhaltungen:
**DE-A- 3 322 710**
**DE-C- 0 965 607**

**OPTICAL ENGINEERING, Band 27, Nr. 9, September 1988, Seiten 823-829; S. MORI et al.: "Laser measurement system for precise and fast postioning"**

**REVIEW OF SCIENTIFIC INSTRUMENTS, Band 59, Nr. 11, November 1988, Seiten 2237-2340; D. RUGAR et al.: "Force microscrope using a fiber-optic displacement sensor"**

**APPLIED OPTICS, Band 29, Nr. 31, 1. November 1990, Seiten 4715-4719; B.A. OMAR et al.: "Differential phase quadrature surface profiling interferometer"**

**Journal Vac. Sci. Technol., Bd. A6, Nr. 2, Seiten 266-270, 1988**

(73) Patentinhaber: **Firma Carl Zeiss**

**D-73446 Oberkochen(DE)**

(84) Benannte Vertragsstaaten:
**DE FR IT NL SE**

(73) Patentinhaber: **CARL ZEISS-STIFTUNG HANDELND ALS CARL ZEISS**

**D-89518 Heidenheim (Brenz)(DE)**

(84) Benannte Vertragsstaaten:
**GB**

(72) Erfinder: **Massig, Jürgen Heinz, Dr.**
**Alemannenstrasse 37**
**W-7087 Essingen(DE)**

**Beschreibung**

Die vorliegende Erfindung betrifft einen interferometrischen Sensor, vorzugsweise für ein Atomic-Force-Mikroskop, entsprechend dem Oberbegriff des Anspruches 1.

Beim Atomic-Force-Mikroskop wird die Probe, deren Oberfläche untersucht werden soll, auf einen x-y-z-Scanner gesetzt und leicht gegen eine feine Spitze gedrückt, die an einer Blattfeder befestigt ist. Die Auslenkung dieser Blattfeder kann auf unterschiedliche Weise gemessen werden.

Aus der EP-A- 0 290 648 ist bekannt, die Blattfeder und ihren Träger so auszubilden, daß eine elektrische Größe, z.B. die Kapazität, durch die Auslenkung geändert wird.

In einer Veröffentlichung von R. Erlandsson (J. Vac. Sci. Technol. A6 (2), 266 (1988)) ist ein interferometrisches Verfahren beschrieben. Hierfür ist die Blattfeder in der Nähe der Meßspitze reflektierend ausgebildet und auf dieser Meßfläche wird der Meßstrahl eines Fizeau-artigen Interferometers durch ein Mikroskopobjektiv fokussiert. Auf der anderen Seite des Mikroskopobjektives befindet sich eine Platte, deren eine Grenzfläche als Referenzfläche dient. Der senkrecht auf diese Referenzfläche auftreffende annähernd parallele Laserstrahl kommt von einem Teilerwürfel, der das von Meß- und Referenzfläche reflektierte Licht auf einen Detektor durchläßt und der die von einem Laser kommende Strahlung in Richtung des Mikroskopobjektives umlenkt. Der Teilerwürfel ist dafür polarisationsabhängig ausgebildet und zwischen ihm und der Platte befindet sich eine Lambda-Viertel-Platte, die verhindert, daß Strahlung in den Laser zurück reflektiert wird. Die von dem Detektor erfaßte Strahlungsleistung hängt durch die Interferenz von Meßstrahl und Vergleichsstrahl vom Abstand der Meßfläche von dem übrigen Interferometer ab. Bei Abstandsänderungen der Meßfläche erhält man daher Änderungen des Detektorsignales.

Nachteilig bei diesem bekannten interferometrischen Sensor ist, daß kleine Abstandsänderungen der Meßfläche nicht genügend genau gemessen werden können, wenn maximale oder minimale Strahlungsleistung auf den Detektor trifft. Außerdem erfordert der große Weglängenunterschied des von Meß- und Referenzfläche reflektierten Lichtes eine hohe Wellenlängenstabilität und eine große Kohärenzlänge und damit einen teuren Laser. Der große Weglängenunterschied bewirkt außerdem eine große Temperaturempfindlichkeit der Anordnung.

Aufgabe der vorliegenden Erfindung ist es, einen interferometrischen Sensor zu schaffen, mit dem kleine Abstandsänderungen immer genügend genau gemessen werden können, der nur einen preiswerten und in den Abmessungen kleinen Laser erfordert und der gegen Temperatureinflüsse möglichst unempfindlich ist.

Die gestellte Aufgabe wird bei einem interferometrischen Sensor nach dem Oberbegriff des Anspruchs 1 erfindungsgemäß dadurch gelöst, daß ein Verzögerungselement zwischen Strahlteiler und Referenzfläche oder zwischen Strahlteiler und Meßfläche angeordnet ist, welches derart ausgebildet ist, daß zwei Teilwellen mit zueinander senkrechter Polarisation einen Gangunterschied (für zweimaligen Durchgang) von ungefähr Lambda-Viertel erhalten, so daß für die zueinander senkrechten Polarisationrichtungen unterschiedliche Gangunterschiede zwischen Meßstrahl und Vergleichsstrahl entstehen, wobei der Unterschied der Gangunterschiede ungefähr Lambda-Viertel beträgt, und daß als Detektionseinrichtung ein polarisationsabhängiger Strahlteiler und zwei Detektoren vorgesehen sind.

Die Anordnung von Strahlteiler und Referenzfläche zwischen Mikroskopobjektiv und Meßfläche ist aus der sogenannten Mirau-Anordnung bekannt, die z.B. in der DE-C-965 607 beschrieben ist. Diese Mirau-Interferenzanordnung ist jedoch nur zur Erzeugung eines (zweidimensionalen) Interferogramms eines mikroskopischen Präparates bekannt. Bei ihr erfolgt die Untersuchung der Oberflächenform des Präparates mit Hilfe von Interferenzstreifen, aus deren Verlauf die Topographie der Oberfläche bestimmt werden kann. Es handelt sich dabei um die Untersuchung einer Oberfläche.

Bei der vorliegenden Erfindung besteht jedoch die Aufgabe, für einen praktisch punktförmigen Meßort die Abstandsänderungen als Funktion der Zeit zu erfassen. Würde man die Mirau-Anordnung für die vorliegende Aufgabe übernehmen, indem die zeitliche Änderung der Topographie über Bildauswertung erfaßt wird, so käme man zu einem sehr großen und teilweise überflüssigen Aufwand, da die Topographie sich im vorliegenden Fall nicht ändert. Nimmt man zur Vermeidung eines zu großen Aufwandes praktisch nur einen Punkt der Oberfläche dann tritt die weiter oben beschriebene Problematik auf, daß kleine Änderungen und ihre Richtung nicht immer genügend genau und sicher ermittelt werden können, was bei Benutzung der bekannten Mirau-Anordnung durch die Information aus der Umgebung des Punktes teilweise kompensiert werden kann.

Durch die erfindungsgemäße Einführung eines Verzögerungselementes, durch das die Strahlung mit einer Polarisationsrichtung gegenüber der Strahlung mit der dazu senkrechten Polarisationsrichtung verzögert wird, und durch zwei Detektoren für die getrennte Erfassung der Strahlungen in diesen Polarisationsrichtungen wird mit verhältnismäßig kleinem Aufwand die Aufgabe gelöst.

Durch die Anordnung der Referenzfläche zwischen Mikroskopobjektiv und Meßfläche und die dadurch bedingten kleinen Abstände zwischen Meß- und Referenzfläche kann als Lichtquelle ein Laser mit geringer Wellenlängenstabilität und kleiner Kohärenzlänge, also z.B. eine Laserdiode, verwendet werden.

In einer ersten vorteilhaften Ausführungsform der Erfindung wird die vom Laser ausgehende Strahlung auf der Meßfläche bzw. der Referenzfläche fokussiert; Mikroskopobjektiv und Strahlteiler werden rotationssymmetrisch zur optischen Achse ausgeleuchtet.

In einer zweiten vorteilhaften Ausführungsform wird die vom Laser ausgehende Strahlung in einem kleinen Abstand vor der Meßfläche bzw. der Referenzfläche fokussiert, so daß die von Meßfläche und Referenzfläche reflektierten Strahlen auf der optischen Achse fokussiert und dort von einem kleinflächigen Spiegel zur Detektionseinrichtung umgelenkt werden.

In einer dritten vorteilhaften Ausführungsform werden Mikroskopobjektiv und Strahlteiler von der zur Meßfläche bzw. Referenzfläche gehenden Strahlung höchstens nur auf einer Hälfte und von den zur Detektionseinrichtung gehenden Strahlen höchstens in der anderen Hälfte ausgeleuchtet, so daß hin- und zurückgehende Strahlen räumlich voneinander getrennt sind.

Das Verzögerungselement kann zwischen Strahlteiler und Meßfläche oder zwischen Strahlteiler und Referenzfläche angeordnet sein. Es kann in die Platte, welche die teilreflektierende Schicht des Strahlteilers trägt, oder in die Platte, welche die reflektierende Schicht der Referenzfläche trägt, eingekittet oder auf deren freien Oberflächen aufgekittet sein.

Es sei hier darauf hingewiesen, daß die Lambda-Viertel-Platte in der oben zitierten Veröffentlichung von Erlandsson eine völlig andere Aufgabe hat. Sie dient dort lediglich dazu, zusammen mit dem polarisierenden Strahlteiler zu verhindern, daß Laserstrahlung in den Laser zurück reflektiert wird. Die bei der Erfindung benutzte Anwendung des Verzögerungselementes entspricht vielmehr der bekannten Erzeugung eines sogenannten Quadratursignals, worauf in der Erläuterung zu den Figuren näher eingegangen wird.

Es ist selbstverständlich, daß der Gangunterschied des Verzögerungselementes (für zweifachen Durchgang) nicht nur

$\lambda/4$ sondern auch $\lambda/4 + n\,\lambda/2$ sein kann.

Ein besonderer Vorteil der Erfindung ist, daß - im Gegensatz zur Anordnung von Erlandsson - an das Mikroskopobjektiv nur sehr geringe Anforderungen gestellt werden, da Linsenfehler die Wellenfronten von Meß- und Vergleichsstrahl identisch verformen, so daß die Interferenzfähigkeit nicht beeinträchtigt wird. Da das Mikroskopobjektiv bei der Erfindung - im Gegensatz zur bekannten Mirau-Anordnung - auch kein Bild erzeugt, kann es aus einer einzelnen Linse bestehen, die sogar aus Kunststoff sein kann.

Die Erfindung wird im folgenden anhand von in den Figuren 1 bis 5 beschriebenen Ausführungsbeispielen erläutert.

Dabei zeigen:

Figur 1     Eine Anordnung, bei der die vom Laser ausgehende Strahlung auf der Meßfläche bzw. der Referenzfläche fokussiert wird und Mikroskopobjektiv und Strahlteiler rotationssymmetrisch zur optischen Achse ausgeleuchtet werden;

Figur 2     eine Anordnung, bei der die vom Laser ausgehende Strahlung in einem kleinen Abstand vor der Meßfläche bzw. der Referenzfläche fokussiert wird;

Figur 3     eine Anordnung, bei der Mikroskopobjektiv und Strahlteiler von der zur Meßfläche bzw. Referenzfläche gehenden Strahlung nur in einer Hälfte und von der zur Detektionseinrichtung gehenden Strahlung nur in der anderen Hälfte ausgeleuchtet werden;

Figur 4     eine Ausführungsform, bei der das Verzögerungselement in die Platte eingekittet ist, auf welche die Referenzfläche als reflektierende Schicht aufgebracht ist, und

Figur 5     eine Ausführungsform, bei der das Verzögerungselement durch die teilreflektierende Schicht des Strahlteilers und die reflektierende Schicht der Referenzfläche verwirklicht ist.

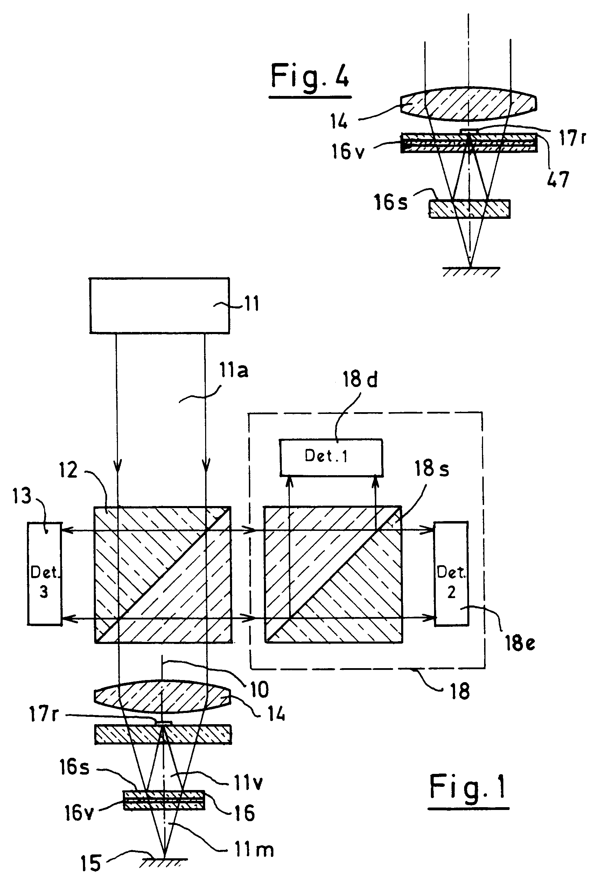

In Figur 1 ist mit (11) ein Laser oder z.B. eine Laserdiode mit einem Kollimator bezeichnet. Das annähernd parallele Strahlenbündel (11a) wird zum Teil von dem Teilerwürfel (12) auf den Detektor (13) reflektiert, dessen einzige Aufgabe eine Kontrolle der vom Laser (11) abgegebenen Leistung ist. Diese Kontrolle kann bei genügender Leistungsstabilität oder geringen Genauigkeitsanforderungen entfallen. Das durch den Teilerwürfel hindurchgehende Bündel wird von dem Mikroskopobjektiv (14) auf die reflektierende Meßfläche (15) fokussiert. Durch den Strahlteiler (16s) wird das konvergierende Bündel in einen Meßstrahl (11m) und einen Vergleichsstrahl (11v) aufgespalten, wobei der Vergleichsstrahl von der Referenzfläche (17r) reflektiert wird, die nur einen kleinen Teil der aus dem Mikroskopobjektiv unmittelbar aus- oder eintretenden Strahlen beschneidet. Meß- und Vergleichsstrahl werden nach der Reflexion vom Strahlteiler (16s) wieder vereinigt und gehen als annähernd parallele Strahlen zum Teilerwürfel (12) zurück, von dem sie gemeinsam in Richtung der Detektionseinrichtung (18) reflektiert werden.

Der Strahlteiler (16s) besteht aus einer teilreflektierenden Schicht, welche auf der Glasplatte (16) aufgebracht ist. In einer vorteilhaften Ausführungsform ist in diese Glasplatte das Verzögerungselement (16v), z.B. in Form einer doppelbrechenden Polyvinylalkoholfolie, eingekittet. Das Verzögerungselement bewirkt infolge seiner Doppelbrechung eine Aufspaltung in Teilwellen mit zueinander senkrechten Polarisation, zwischen denen ein Gangunterschied von ungefähr Lambda-Viertel bei zweimaligem Durchgang entsteht. Durch diese Aufspaltung des Meßstrahles (11m) entstehen für die beiden Polarisationsrichtungen unterschiedliche Gangunterschiede zwischen Meßstrahl und Vergleichsstrahl, wobei der Unterschied ungefähr Lambda-Viertel beträgt. In den mit den Figuren beschriebenen Ausführungsformen wird das Verzögerungselement zweckmäßigerweise so eingebaut, daß die Polarisationsrichtungen in und senkrecht zur Zeichenebene liegen.

In der Detektionseinrichtung (18) wird durch den polarisationsabhängigen Strahlteiler (18s) die Strahlung mit der einen Polarisationsrichtung auf den Detektor (18d) und die Strahlung mit der anderen Polarisationsrichtung auf den Detektor (18e) geleitet. Wenn durch das Verzögerungselement für die beiden Polarisationsrichtungen eine Differenz der Gangunterschiede von Meßstrahl (11m) und Vergleichsstrahl (11v) von ungefähr Lambda-Viertel bewirkt wird, dann erhalten die Detektoren (18d, 18e) unterschiedliche Signale, von denen immer aus einem Richtung und Betrag einer Abstandänderung der Meßfläche (15) zuverlässig und genau ermittelt werden kann. Dazu darf die Strahlung der Lichtquelle (11) beim Auftreffen auf den Strahlteiler (16s) nicht in einer der beiden Polarisationsrichtungen linear polarisiert sein, Falls die Lichtquelle linear polarisiert ist, wird ihre Polarisationsrichtung so orientiert, daß in die Polarisationsrichtungen des Verzögerungselementes annähernd gleiche Strahlungsintensitäten fallen.

Als Lichtquelle kann z.B. die Laserdiode SLD 202 U der Fa. Sony verwendet werden, deren Strahlung nahezu vollständig linear polarisiert ist. Als Detektoren sind z.B. die Silizium-Photodioden BPW 34 B der Fa. Siemens geeignet.

Die Aufspaltung einer Strahlung durch ein Verzögerungselement, z.B. eine Lambda-Viertel-Platte in zwei Komponenten, von denen die zweite gegenüber der ersten um Pi-Halbe verschoben ist, und die Trennung der beiden Komponenten durch polarisationsabhängige Strahlteiler ist bei Interferometern bekannt, z.B. aus dem Buch von M. Ross, Laser Applications, Vol. /1, Seite 84, Academic Press, New York 1971. Diese Methode, die auch unter der Bezeichnung Quadratursignal bekannt ist, wird im folgenden für das Ausführungsbeispiel näher beschrieben.

Eine Abstandsänderung der Meßfläche (15) in Richtung der optischen Achse (10) bewirkt auf einem Detektor, z.B. dem Detektor (18d) infolge der Interferenz von Meßstrahl und Vergleichsstrahl ein Wechselspannungssignal, das einem Gleichspannungssignal überlagert ist und folgenden Verlauf hat

$$U(d) = U_1 \sin(4\pi d/\lambda + \psi_0)$$

dabei ist d der Abstand, $\lambda$ die Wellenlänge der verwendeten Stahlung, $U_1$ die maximale Amplitude des Wechselspannungssignales und $\psi_0$ ein konstanter Phasenwinkel. Mit einem derartigen Signal lassen sich in der Nähe der Maxima und Minima Abstandsänderungen nicht genau und ihre Richtung nicht sicher bestimmen. Diese Mängel werden mit dem zweiten Detektor vermieden, wenn dessen Wechselspannungssignal in der Phase ungefähr um Pi-Halbe versetzt ist, weil dessen Signal immer gerade dort große und im Verlauf eindeutige Änderungen hat, wo das erste Signal einen Extremwert durchläuft. Zwei derart phasenverschobene Signale werden durch das Verzögerungselement (16v) dadurch erzeugt, daß in ihm für die beiden Polarisationsrichtungen des Meßstrahles ein Weglängenunterschied von Lambda-Viertel bzw. eine Phasendifferenz von Pi-Halbe beim zweimaligen Durchtritt entsteht.

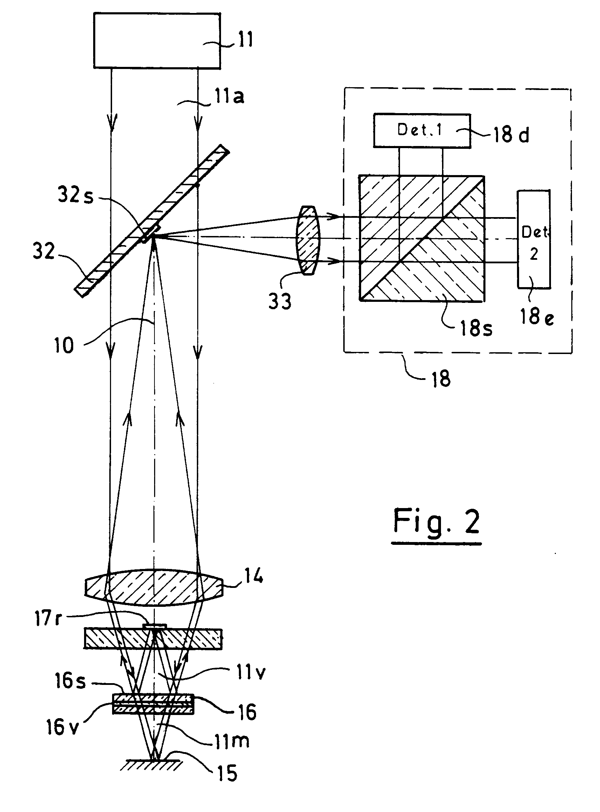

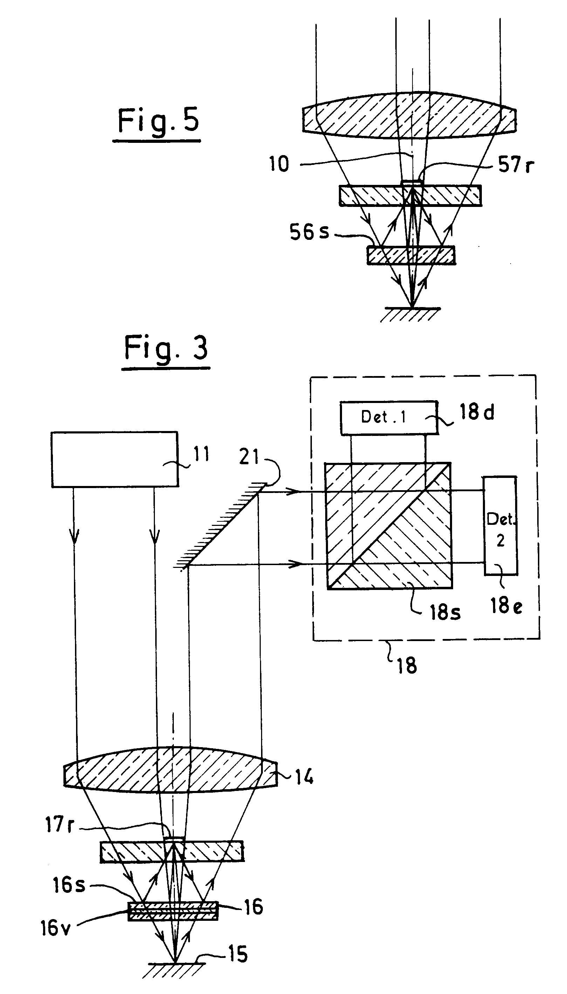

Bei der beschriebenen Anordnung wird ein Teil der Strahlung in die Lichtquelle zurück reflektiert. Dies muß bei manchen Lasern unterbunden werden. Das kann durch einen Faraday-Isolator zwischen Laser (11) und Teilerwürfel (12) erreicht werden. Wesentlich preiswerter sind die in den Figuren 2 und 3 dargestellten Anordnungen, bei denen durch geometrische Trennung von Hin- und Rückweg keine Strahlung in die Lichtquelle zurück reflektiert wird.

In Figur 2 wird durch einen etwas größeren Abstand des Mikroskopobjektives (14) von der Meßfläche (15) erreicht, daß diese nicht mehr im Fokus des Objektives liegt, wodurch die reflektierten Strahlenbündel konvergent sind und daher in ihrem Fokus durch einen kleinen Spiegel (32s) auf einer Glasplatte (32) aus dem Beleuchtungsstrahlengang herausgelenkt werden können. Das umgelenkte, divergierende Bündel wird bei großem Abstand des polarisationsabhängigen Teilerwürfels (18s) durch die Linse (33) kollimiert. Der übrige Aufbau entspricht der Figur 1.

In Figur 3 wird von den zur Meßfläche (15) bzw. Referenzfläche (17r) gehenden Strahlungsbündeln höchstens die eine Hälfte von Mikroobjektiv (14) und Strahlteiler (16s) ausgeleuchtet und die von der Meßfläche (15) bzw. Referenzfläche (17r) reflektierten Strahlungsbündel gehen durch die andere Hälfte von Mikroobjektiv (14) und Strahlteiler (16s). Der übrige Aufbau entspricht bis auf den Umlenkspiegel (21) wieder der Figur 1.

Das Verzögerungselement kann - wie in den Figuren 1 bis 3 dargestellt - zwischen Strahlteiler (16s) und Meßfläche (15) angeordnet sein. In diesem Fall ist es zweckmäßig, es in die Glasplatte (16) zu integrieren, indem ein Lambda-Achtel-Plättchen auf die Rückseite der Glasplatte (16) oder eine Lambda-Achtel-Folie zwischen zwei Hälften der Glasplatte (16) gekittet wird. Natürlich kann das Verzögerungselement auch als selbständiges Bauteil zwischen Strahlteiler (16s) und Meßfläche (15) angeordnet werden.

Das Verzögerungselement kann als Lambda-Achtel-Plättchen oder -Folie auch zwischen Strahlteiler und Referenzfläche angeordnet werden. In diesem Fall wirkt das Verzögerungselement vor der Aufteilung von Meß- und Vergleichsstrahl sowie nach deren Zusammenführung auf beide Strahlen in gleicher Weise und bringt dadurch in diesen Teilen der Strahlengänge keine Differenz der Gangunterschiede.

Eine zweckmäßige Ausführungsform ist in Figur 4 dargestellt, bei welcher eine Lambda-Achtel-Folie (16v) zwischen die beiden Hälften einer Glasplatte (47) eingekittet ist, auf deren dem Strahlteiler (16s) abgewandten Seite die Referenzfläche (17r) in Form einer reflektierenden Schicht aufgebracht ist. Auch in diesem Fall kann das Verzögerungselement natürlich auch als selbständiges Bauteil zwischen Strahlteiler (16s) und Referenzfläche (17r) ausgeführt werden.

Das Verzögerungselement kann auch in Form einer Schicht (56s) realisiert werden, die zugleich teilreflektiert und damit auch als Strahlteiler verwendet wird. Auch die Referenzfläche kann als reflektierende Schicht (57r) realisiert werden, die zugleich als Verzögerungselement wirkt. In Figur 5 ist dies dargestellt für den Fall, daß das Verzögerungselement durch beide Arten von Schichten realisiert wird. Diese Realisierung des Verzögerungselementes ist jedoch nur möglich bei einer nicht rotationssymmetrischen Ausleuchtung des Mikroskopobjektives (14) und der bis zur Meßfläche (15) folgenden Elemente, wie das in der Figur 3 dargestellt ist. Dadurch trifft die Strahlung auf die obengenannten Schichten unter einem mittleren Winkel, der von der optischen Mittelachse (10) abweicht, so daß - wie aus den Fresnelschen Formeln bei schräg einfallender Strahlung bekannt ist - eine Aufteilung in s- und p-Polarisation vorgegeben ist.

**Patentansprüche**

1. Interferometrischer Sensor, vorzugsweise für Atomic-Force-Mikroskope, zur Messung von Abstandsänderungen einer kleinen, reflektierenden Meßfläche (15), bestehend aus einer Lichtquelle (11), vorzugsweise einem Laser, einem Strahlteiler (16s) zur Aufteilung in einen Meßstrahl (11m) und einen Vergleichsstrahl (11v), einer reflektierenden Referenzfläche (17r), einem Mikroskopobjektiv (14) und einer Detektionseinrichtung (18), wobei Strahlteiler (16s) und Referenzfläche (17r) zwischen Mikroskopobjektiv (14) und Meßfläche (15) angeordnet sind, dadurch gekennzeichnet, daß ein Verzögerungselement (16v) zwischen Strahlteiler (16s) und Referenzfläche (17r) oder zwischen Strahlteiler (16s) und Meßfläche (15) angeordnet ist, welches derart ausgebildet ist, daß zwei Teilwellen mit zueinander senkrechter Polarisation einen Gangunterschied für zweimaligen Durchgang von ungefähr Lambda-Viertel erhalten, so daß für die zueinander senkrechten Polarisationrichtungen unterschiedliche Gangunterschiede zwischen Meßstrahl (11m) und Vergleichsstrahl (11v) entstehen, wobei der Unterschied der Gangunterschiede ungefähr Lambda-Viertel beträgt, und daß als Detektionseinrichtung (18) ein polarisationsabhängiger Strahlteiler (18s) und zwei Detektoren (18d, 18e) vorgesehen sind.

2. Interferometrischer Sensor nach Anspruch 1, dadurch gekennzeichnet, daß die vom Laser (11) ausgehende Strahlung auf der Meßfläche (15) bzw. der Referenzfläche (17r) fokussiert ist und daß Mikroskopobjektiv (14) und Strahlteiler (16s) rotationssymmetrisch zur optischen Achse (10) ausgeleuchtet sind (Figur 1).

3. Interferometrischer Sensor nach Anspruch 1, dadurch gekennzeichnet, daß die vom Laser (11) ausgehende Strahlung in einem kleinen Abstand vor der Meßfläche (15) bzw. Referenzfläche (17r) fokussiert ist, so daß die von Meßfläche (15) und Referenzfläche (17r) reflektierten Strahlenbündel auf der optischen Achse (10) fokussiert sind und dort von einem kleinen Spiegel (32s) zur Detektionseinrichtung (18) umgelenkt sind (Figur 2).

4. Interferometrischer Sensor nach Anspruch 1, dadurch gekennzeichnet, daß Mikroskopobjektiv (14) und Strahlteiler (16s) auf einer Hälfte nur von der in Richtung Meßfläche (15) bzw. Referenzfläche (17r) gehenden Strahlung und auf der anderen Hälfte nur von der in Richtung Detektionseinrichtung (18) gehenden Strahlung ausgeleuchtet sind (Figur 3).

5. Interferometrischer Sensor nach einem der Ansprüche 1 bis 4, dadurch gekennzeichnet, daß das Verzögerungselement (16v) zwischen Strahlteiler (16s) und Meßfläche (15) angeordnet ist.

6. Interferometrischer Sensor nach Anspruch 5, dadurch gekennzeichnet, daß das Verzögerungselement (16v) in die Glasplatte (16) für die teilreflektierende Schicht des Strahlteilers (16s) eingekittet oder auf deren freien Oberfläche aufgekittet ist.

7. Interferometrischer Sensor nach einem der Ansprüche 1 bis 4, dadurch gekennzeichnet, daß das Verzögerungselement (16v) zwischen Strahlteiler (16s) und Referenzfläche (17r) angeordnet ist.

8. Interferometrischer Sensor nach Anspruch 7, dadurch gekennzeichnet, daß das Verzögerungselement (16v) in die Glasplatte (47) für die reflektierende Schicht der Referenzfläche (17r) eingekittet oder auf deren freie Oberfläche aufgekittet ist.

9. Interferometrischer Sensor nach einem der Ansprüche 1 bis 8, dadurch gekennzeichnet, daß das Verzögerungselement (16v) eine Polyvinylalkoholfolie ist.

10. Interferometrischer Sensor nach Anspruch 4, dadurch gekennzeichnet, daß das Verzögerungselement durch die teilreflektierende Schicht (56s) des Strahlteilers und/oder die reflektierende Schicht (57r) der Referenzfläche verwirklicht ist, indem bei den Reflexionen eine Differenz zwischen den Phasensprüngen der beiden Polarisationsrichtungen von ungefähr Pi-Halbe entsteht.

## Claims

1. Interferometric sensor, preferably for an atomic force microscope, for measuring distance changes of a small reflective measurement surface (15) comprising a light source (11), preferably being a laser, a beam splitter (16s) for splitting into a measuring beam (11m) and into a reference beam (11v), a reflecting reference surface (17r), a microscope objective (14) and a detecting device (18), whereby the beam splitter (16s) and the reference surface (17r) are arranged between the microscope objective (14) and the measurement surface (15), characterized in that a retarder (16v) is arranged between the beam splitter (16s) and the reference surface (17r) or between the beam splitter (16s) and the measurement surface (15), which is configured so that two partial waves having perpendicular polarization directions with respect to another receive a path difference corresponding approximately to a quarter of lambda for a two time travel, so that for perpendicular polarization directions different path differences occure between the measurement beam (11m) and the reference beam (11v) whereby the difference of the path differences corresponds approximately to a quarter of lambda and that the detecting device (18) includes a polarization dependent beam splitter (18s) and two detectors (18d, 18e).

2. Interferometric sensor of claim 1, characterized in that the radiation emanating from the laser (11) is focussed onto the measurement surface (15) and onto the reference surface (17r) and that the microscope objective (14) and the beam splitter (16s) are illuminated rotational-symmetrically relative to the optical axis (10) (Figure 1).

3. Interferometric sensor of claim 1, characterized in that the radiation emanating from the laser (11) is focussed at a small spacing ahead of the measurement surface (15) and the reference surface (17r) so that ray bundles reflected by the measurement surface (15) and by the reference surface (17r) are focussed at a position on the optical axis (10) and are deflected there by a small mirror (32s) to the detecting device (18) (Figure 2).

4. Interferometric sensor of claim 1, characterized in that the microscope objective (14) and the beam splitter (16s) are illuminated on a first half only by the radiation passing into the direction of the measurement surface (15) and the reference surface (17r) and on a second half only by the radiation passing into the direction of the detecting device (18) (Figure 3).

5. Interferometric sensor of one of the claims 1 to 4, characterized in that the retarder (16v) is arranged between the beam splitter (16s) and the measurement surface (15).

6. Interferometric sensor of claim 5, characterized in that the retarder (16v) is cemented into the glass plate (16) for the partially reflecting layer of the beam splitter (16s) or is cemented onto its free surface.

7. Interferometric sensor of one of the claims 1 to 4, characterized in that the retarder (16v) is arranged between the beam splitter (16s) and the reference surface (17r).

8. Interferometric sensor of claim 7, characterized in that the retarder (16v) is cemented into the glass plate (47) for the reflecting layer of the reference surface (17r) or is cemented onto its free surface.

9. Interferometric sensor of one of the claims 1 to 8, characterized in that the retarder (16v) is a polyvinyl alcohol foil.

10. Interferometric sensor of claim 4, characterized in that the retarder is realized by the partially reflecting layer (56s) of the beam splitter and/or by the reflecting layer (57r) of the reference surface in a way that the reflection causes a difference between the phase jumps of the polarization directions corresponding approximately to an half of $\pi$.

**Revendications**

1. Capteur interférométrique, de préférence pour des microscopes Atomic-Force, pour mesurer des variations de distance d'une petite surface réfléchissante de mesure (15), constitué par une source de lumière (11), de préférence un laser, un diviseur de faisceau (16s) servant à réaliser la division d'un faisceau en un faisceau de mesure (11m) et un faisceau de comparaison (11v), une surface de référence réfléchissante (17r), un objectif de microscope (14) et un dispositif de détection (18), et dans lequel le diviseur de faisceau (16s) et la surface de référence (17r) sont disposés entre l'objectif (14) du microscope et la surface de mesure (15), caractérisé en ce qu'un élément de retardement (16v) est disposé entre le diviseur de faisceau (16s) et la surface de référence (17r) ou entre le diviseur de faisceau (16s) et la surface de mesure (15) et est agencé de telle sorte que deux zones partielles ayant des polarisations perpendiculaires entre elles, présentent une différence de trajet égale approximativement à lambda/quatre, pour un passage double, de sorte que pour les directions de polarisation perpendiculaires entre elles, on obtient différentes différences de trajet entre le faisceau de mesure (11m) et le faisceau de comparaison (11v), la différence entre les différences de trajet étant égale approximativement a lambda/quatre, et qu'il est prévu, comme dispositif de détection (18), un diviseur de faisceau (18s) qui dépend de la polarisation, et deux détecteurs (18d, 18e).

2. Capteur interférométrique selon la revendication 1, caractérisé en ce que le rayonnement émis par le laser (11) est focalisé sur la surface de mesure (15) et sur la surface de référence (17r) et que l'objectif (14) du microscope et le diviseur de faisceau (16s) sont éclairés selon une configuration à symétrie de révolution par rapport à l'axe optique (10) (figure 1).

3. Capteur interférométrique selon la revendication 1, caractérisé en ce que le rayonnement émis par le laser (11) est focalisé à une faible distance de la surface de mesure (15) et de la surface de référence (17r), de sorte que les faisceaux de rayons, qui sont réfléchis par la surface de mesure (15) et la surface de référence (17r), sont focalisés sur l'axe optique (10) et y sont déviés par un petit miroir (32s) en direction du dispositif de détection (18) (figure 2).

4. Capteur interférométrique selon la revendication 1, caractérisé en ce que l'objectif (14) du microscope et le diviseur de faisceau (16s) sont éclairés pour une moitié, uniquement par le rayonnement qui est émis en direction de la surface de mesure (15) ou de la surface de référence (17r) et, pour l'autre moitié, uniquement par le rayonnement émis en direction du dispositif de détection (18) (figure 3).

5. Capteur interférométrique selon l'une des revendications 1 à 4, caractérisé en ce que l'élément de retardement (16v) est disposé entre le diviseur de faisceau (16s) et la surface de mesure (15).

6. Capteur interférométrique selon la revendication 5, caractérisé en ce que l'élément de retardement (16v) est fixé par un ciment dans la plaque de verre (16) pour la couche partiellement réfléchissante du diviseur de faisceau (16s) ou est scellé au moyen d'un ciment sur la surface libre de cette plaque.

7. Capteur interférométrique selon l'une des revendications 1 à 4, caractérisé en ce que l'élément de retardement (16v) est disposé entre le diviseur de faisceau (16s) et la surface de référence (17r).

8. Capteur interférométrique selon la revendication 7, caractérisé en ce que l'élément de retardement (16v) est fixé par un ciment dans la plaque de verre (47) pour la couche réfléchissante de la surface de référence (17r) ou est fixé par un ciment sur la surface libre de cette plaque.

9. Capteur interférométrique selon l'une des revendications 1 à 8, caractérisé en ce que l'élément de retardement (16v) est une feuille d'alcool polyvinylique.

10. Capteur interférométrique selon la revendication 4, caractérisé en ce que l'élément de retardement est constitué par la couche partiellement réfléchissante (56s) du diviseur de faisceau et/ou par la couche réfléchissante (57r) de la surface de référence, en raison du fait que, lors de l'apparition des réflexions, on obtient une différence égale à environ pi/deux entre les sauts de phase des deux directions de polarisation.

EP 0 438 675 B1

Fig.4

14

16v

17r

47

16s

11

11a

18d

12

13

Det.1

18s

Det.
3

Det.
2

18e

10

14

17r

18

16s

11v

16v

16

11m

15

Fig.1

9

Fig. 2

Fig. 5

Fig. 3